# EUROPEAN PATENT APPLICATION

(11) **EP 1 702 947 A2**
(43) Date of publication of application: **20.09.2006**
(21) Application number: 06425118.4
(22) Date of filing: 27.02.2006
(51) Int. Cl.: C08J 9/32, C08J 9/00, C08L 75/04

(54) **Polyurethane foam and stuffed structure comprising said foam**

(30) Priority: 18.03.2005 IT RM20050125
(71) Applicant: AVIOINTERIORS S.P.A., I-04013 Tor Tre Ponti Latina (IT)
(72) Inventor: Veneruso, Alberto c/o AVIOINTERIORS S.p.A, 04019 latina (IT)
(74) Representative: Iannone, Carlo Luigi

(57) **Abstract**

The invention relates to a polyurethan foam comprising, for 100 parts in weight of a polyol, between 15 and 30 parts in weight of graphite and between 4 and 10 parts in weight of hollow charges of a glass material, and between 50 and 70 parts in weight of isocyanate.

## Description

The present invention relates to a polyurethan foam with improved properties and stuffed structure comprised of said foam.

More specifically, the invention relates to a stuffed structure, particularly suitable for aeronautic field, although it is not exclusively destined to this specific use, being it possible using the same in every other case, said structure having such features permitting obtaining a very light structure, without jeopardising its other properties, such as mechanical strength, density and fire behaviour.

Since many years, solutions are looked for in the aeronautic field for realising stuffed structures for seats able passing the aeronautic tests, requirements of which are very limiting, and in any case enough comfortable and as more light as possible.

Particularly, it would be interesting obtaining a solution permitting obtaining a polyurethan foam suitable for moulding cushions fulfilling the aeronautic rules and, particularly, having the following features:
- fire behaviour: passing the Oil Burner Test (ref: FAR 25 Appendix F Part III)
- density: <= 60 Kg/m³

In this assumption, have been recently realised cushions comprised of polyurethan foam with the addition of graphite in order to tar the compound and conferring to the same the anti-flame properties that the polyurethan foam does not have.

Some solutions of this kind are described in European Patents EP 0414868 and EP 0450403, both in the name of Metzeler Schaum GmbH. A process is described in both patents for realising a polyurethan foam, which is flexible, elastic, having anti-flame properties, and wherein a polyol and a poli-isocyanate are employed mixed with a part of graphite.

Introduction of a particular kind of graphite in the reaction mixture as suggested in the above documents permitted obtaining a polyurethan foam provided with good physical - mechanical properties and having such features to pass the Oil Burner Test.

However, said solution is in any case characterised by negative aspects, particularly due to the fact that density of the foamed piece obtained by said mixture had to be not lower than 70 Kg/m³ in order to pass the Oil Burner Test. On the other hand, said density is too high for aeronautic cushions and is a serious limit to the commercialisation of the same cushions.

In view of the above, the Applicant has realised a solution obviating the above mentioned drawback, permitting obtaining a new structure stuffed with polyurethan foam that, with respect to the known solutions, permits fulfilling the Oil Burner Test requirements, and at the same time permits obtaining a structure with a much lower density with respect to the known structures made up of polyurethan foam.

These results are obtained according to the present invention by the realisation of a polyurethan foam providing, in its reaction mixture, a further very light component, particularly hollow glass micro spheres, the low density of which (about 150 Kg/m³) contributes to raise the volume of the liquid mixture already before the expansion.

It is therefore specific object of the present invention a polyurethan foam comprising, for 100 parts in weight of a polyol, between 15 and 30 parts in weight of graphite and between 4 and 10 parts in weight of hollow charges of a glass material, and between 50 and 70 parts in weight of isocyanate.

According to the invention, preferably between 18 and 25 parts in weight of graphite are provided, still more preferably 20 parts in weight of graphite.

Particularly, an expandable graphite is employed.

Furthermore, according to the invention, preferably between 6 and 8 parts in weight of hollow charges of glass material are provided, still more preferably 7 parts in weight of hollow charges of glass material.

Still according to the invention, said isocyanate is preferably modified diphenil methane 4, 4' di-isocyanate.

According to the invention, said glass material hollow charges are glass hollow micro spheres.

Furthermore, according to the invention, said hollow charges of glass material can be mixed with polyol, with isocyanate or with both of them, during the realisation of polyurethan foam.

Still according to the invention, trietilphosphate can be added, particularly in an amount of 1 - 5 parts in weight, preferably 2 - 4 parts in weight, and still more preferably 3 parts in weight with respect to 100 parts of polyol.

The invention further relates to a stuffed structure employing a polyurethan foam as described in the above.

By employing the polyurethan foam according to the invention, a reduction of density of about 15% is obtained.

As already mentioned, different are the possible combinations of the polyurethan foam according to the invention.

The physical - chemical features of the components and of the weight composition of the reaction mixture are provided in the following for illustrative and not limitative purpose.

Amount of isocyanate employed is in any case variable (also in composition C) since exclusively this feature determines the softness of the cushion to be realised (the higher is the amount of isocyanate, the harder is the cushion obtained; the lower is the amount of isocyanate, the softer is the cushion obtained).

When providing percentages and composition of the polyurethan compound, we will always start from 100 parts in weight of polyol, to which the amount of the other components are referred. Obviously, if the percentage composition is wished, polyol proportion varies accordingly.

Formulas 1 and 2 take into consideration only the main components (polyol, isocyanate, graphite and micro spheres): in formula 1, solid parts (graphite and micro spheres) are all dispersed within polyol, while in composition 2, they are dispersed both in component "a" (polyol) and in component "b" (isocyanate).

A fifth component is introduced in FORMULA 3: trietilphosphate (TEP). It is a low viscosity anti-flame liquid permitting obtaining two advantages:
- easy workability of the mixture
- higher chances of passing the Oil Burner Test.

Particularly, as far as isocyanate is concerned, it is employed diphenil 4,4' di-isocyanate (MDI) having the following features

| | | | |
|---|---|---|---|
| % NCO | 20÷30 | 22÷28 | 27 |
| functionality | 2÷3 | 2,2÷2,7 | 2,3 |

As far as the graphite is concerned, an expandable graphite is employed.

As far as the glass hollow micro spheres are concerned, micro spheres comprised of fine grain inert mineral powders are employed.

| | FORMULA N. 1 | | | FORMULA N. 2 | | | FORMULA N. 3 | | |
|---|---|---|---|---|---|---|---|---|---|
| | A | B | C | A | B | C | A | B | C |
| **Comp "a"** polyol | 100 | 100 | 100 | 100 | 100 | 100 | 100 | 100 | 100 |
| graphite | 15 ÷ 30 | 18 ÷ 25 | 20 | 15 ÷ 30 | 18 ÷ 25 | 20 | 15 ÷ 30 | 18 ÷ 25 | 22 |
| micro spheres | 4 ÷ 10 | 6 ÷ 8 | 7 | - | - | - | | | |
| TEP | - | - | - | - | - | - | 1÷ 5 | 2 ÷ 4 | 3 |
| **Comp "b"** isocyanate | 50 ÷ 70 | 50÷ 70 | 50 ÷ 70 | 50 ÷ 70 | 50 ÷ 70 | 50 ÷ 70 | 50 ÷ 70 | 50 ÷ 70 | 50 ÷ 70 |
| micro spheres | - | - | - | 6 ÷ 12 | 8 ÷ 10 | 9 | 6 ÷ 12 | 8 ÷ 10 | 9 |

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Polyurethan foam comprising, for 100 parts in weight of a polyol, between 15 and 30 parts in weight of graphite and between 4 and 10 parts in weight of hollow charges of a glass material, and between 50 and 70 parts in weight of isocyanate.

2. Polyurethan foam according to claim 1, **characterised in that** between 18 and 25 parts in weight of graphite are provided.

3. Polyurethan foam according to claim 1 or 2, **characterised in that** 20 parts in weight of graphite are provided.

4. Polyurethan foam according to one of the preceding claims, **characterised in that** expandable graphite is employed.

5. Polyurethan foam according to one of the preceding claims, **characterised in that** between 6 and 8 parts in weight of hollow charges of glass material are provided.

6. Polyurethan foam according to one of the preceding claims, **characterised in that** 7 parts in weight of hollow charges of glass material are provided.

7. Polyurethan foam according to one of the preceding claims, **characterised in that** said isocyanate is modified diphenil methane 4, 4' di-isocyanate.

8. Polyurethan foam according to one of the preceding claims, **characterised in that** said glass material hollow charges are glass hollow micro spheres.

9. Polyurethan foam according to one of the preceding claims, **characterised in that** said hollow charges of glass material are mixed with polyol, with isocyanate or with both of them, during the realisation of polyurethan foam.

10. Polyurethan foam according to one of the preceding claims, **characterised in that**, trietilphosphate is added, in an amount of 1 - 5 parts in weight.

11. Polyurethan foam according to claim 10, **characterised in that** 2-4 parts in weight, and still more preferably 3 parts in weight, of trietilphosphate is added with respect to 100 parts of polyol.

12. Stuffed structure **characterised in that** it employs a polyurethan foam according to each one of the claims 1 - 12.
